# EUROPEAN PATENT SPECIFICATION

(11) **EP 1 291 275 B1**
(45) Date of publication and mention of the grant of the patent: **18.01.2006**
(21) Application number: 02396126.1
(22) Date of filing: 23.08.2002
(51) Int. Cl.: B62K 5/08, B62K 5/04

(54) **Bicycle or kickboard equipped with two front wheels**
Fahrrad oder Roller mit zwei Vorderrädern
Bicyclette ou trottinette avec deux roues avant

(30) Priority: 07.09.2001 FI 20011774
(43) Date of publication of application: 12.03.2003
(73) Proprietor: Helkama Velox Oy, 10960 Hanko (FI)
(72) Inventor: Autero, Markku, 10940 Hanko (FI)
(74) Representative: LEITZINGER OY

(56) References cited:
- EP-A- 1 086 888
- Korean Patent Abstract(KR) KR2000 030 806 A (MOON JONG UNG) 5 June 2000 (2000-06-05) XP002252720 & WO 01 68440 A (MOON JONG UNG) 20 September 2001 (2001-09-20)

## Description

The present invention relates to a bicycle or a kickboard equipped with two front wheels, comprising a rear frame and a front frame, said front frame including elongated suspension arms extending a distance in a substantially transverse direction relative to a centre axis and having the ends thereof provided with gearing-mounted and/or articulated bearing supports for the front wheels, said front wheels having a gauge which is alterable in a direction transverse to the driving direction and said front frame having provided therewith a handlebar, as well as steering elements between the handlebar and the bearing supports for steering the bicycle or kickboard.

For example from the Korean patent XP-002252720 are known bicycle with two front wheels having front wheels installed a certain interval in front part of a supporting frame. The front part is provided with a hold bar which can be lifted to remove upper and lower supporting plates so that the space interval of the front wheels can be reduced. Operation of such structure is difficult.

There are prior known bicycles or kickboards with two front wheels, wherein the front forks are attached to suspension arms extending fixedly in a lateral direction relative to the bicycle frame. This type of rigid frame structure has always a constant wheel gauge.

There are prior known frame solutions for bicycles or kickboards, wherein the front and rear frames can be taken apart or can be folded relative to a centre axis about some sort of articulation. The purpose of this type of frame systems is primarily to make a frame structure more compact for storage, the purpose thereof being by no means to facilitate the actual operation or to improve the characteristics of a bicycle in terms of riding or pushing the same forward.

One problem existing in a bicycle or kickboard equipped with two front wheels is the width of a front frame, especially when the width is dimensioned in the anticipation of a stable upright position, not, for example, in view of passing through a given-width doorway. In the anticipation of two front wheels, it has been necessary to widen the frame of a bicycle or kickboard by means of suspension arms extending laterally relative to a centre axis of the bicycle or kickboard, in order to set the front wheels at a sufficient distance from each other. A wide front frame makes the bicycle or kickboard awkward in terms of maneuvering the same in tight places, a particular problem being doorways to storage spaces and narrow gates. Bicycles or kickboards equipped with two front wheels are often used in carrying goods. In many instances, an excessively wide front frame hinders or complicates access to the vicinity of a particular object.

It is an object of the present invention to provide a frame assembly for a bicycle or kickboard equipped with two front wheels, wherein the above practical problems in relation to the width of a front frame are mitigated or eliminated.

In order to accomplish the foregoing objectives, the steering elements include: a frame hinge, a connecting link, which is provided between the front frame and the rear frame and as a result of whose function the position of the front frame and/or the centre axis of the front frame is pivotable relative to the rear frame and/or the centre axis of the rear frame; tie rods, by way of which the handlebar is coupled with the bearing supports for steering the bicycle or kickboard in response to the handlebar regardless of a pivoted position of the front frame with respect to the rear frame, while the gauge between the front wheels in a direction transverse to the driving direction is dependent on a pivoted position of the front frame with respect to the rear frame.

Preferred embodiments of the invention are disclosed in the dependent claims.

The present invention will now be described with reference to the accompanying drawings, in which:
- Fig. 1: shows in a plan view a bicycle equipped with two front wheels.
- Fig. 2: shows the bicycle of fig. 1 in a side view.

- Fig. 3: shows the bicycle of fig. 1 in a plan view, with the front frame in a pivoted position, and
- Fig. 4: shows the bicycle of fig. 1 in a side view, with the front frame in a pivoted position.

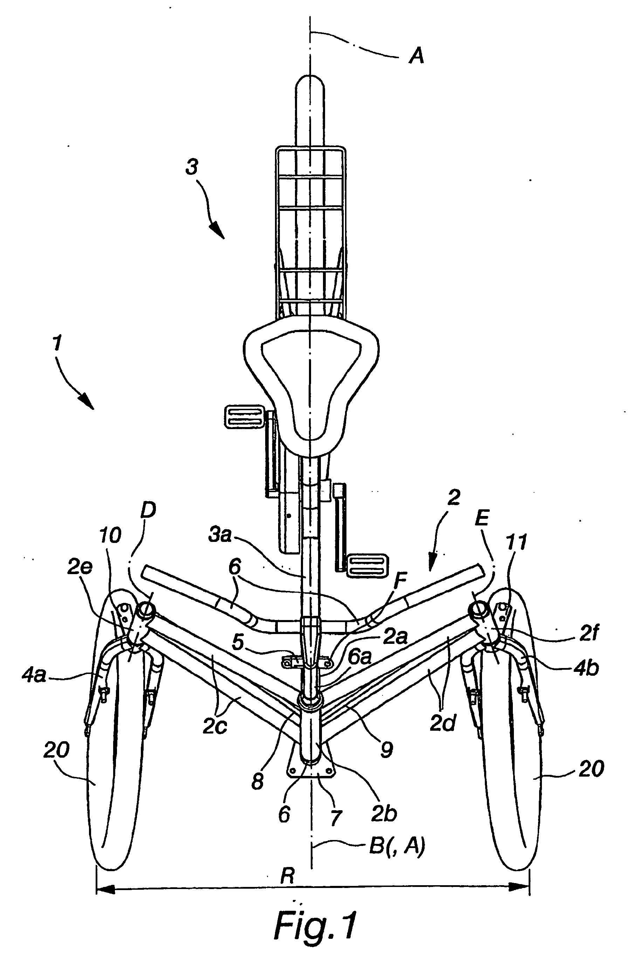

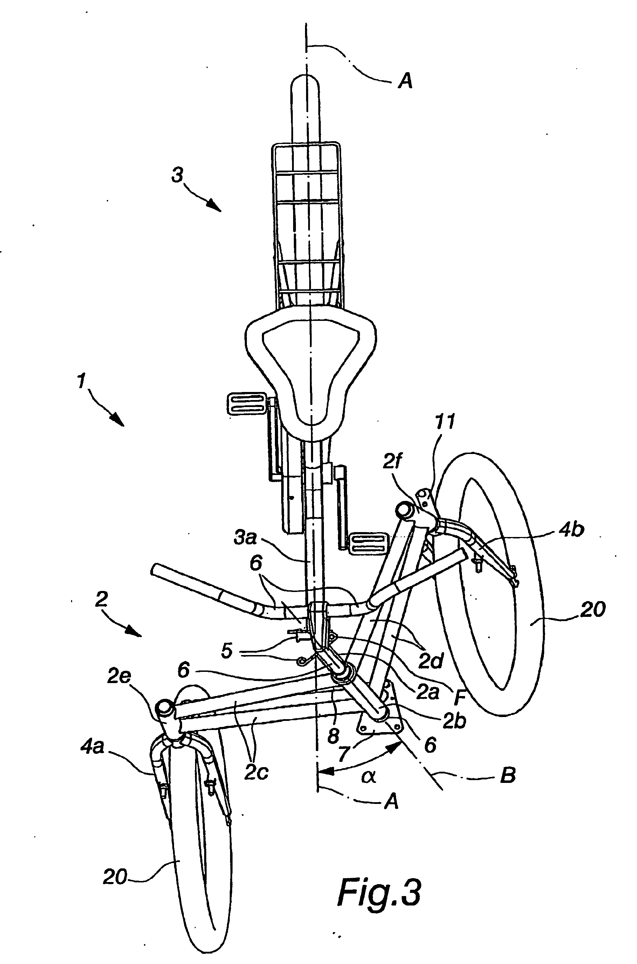

Figs. 1-4 illustrate a bicycle 1 equipped with two front wheels 20. The bicycle 1 comprises a rear frame, designated with reference numeral 3, and a front frame, designated with reference numeral 2. It should be noted that elements included in the front frame 2 are indicated with reference numeral 2 and an identifying postfix letter. In this embodiment, the rear frame 3 of the bicycle 1 is consistent with the prior art, comprising also a rear wheel attached to a rear fork, a saddle, as well as elements for operating the bicycle (pedals, sprockets, chains, etc.).

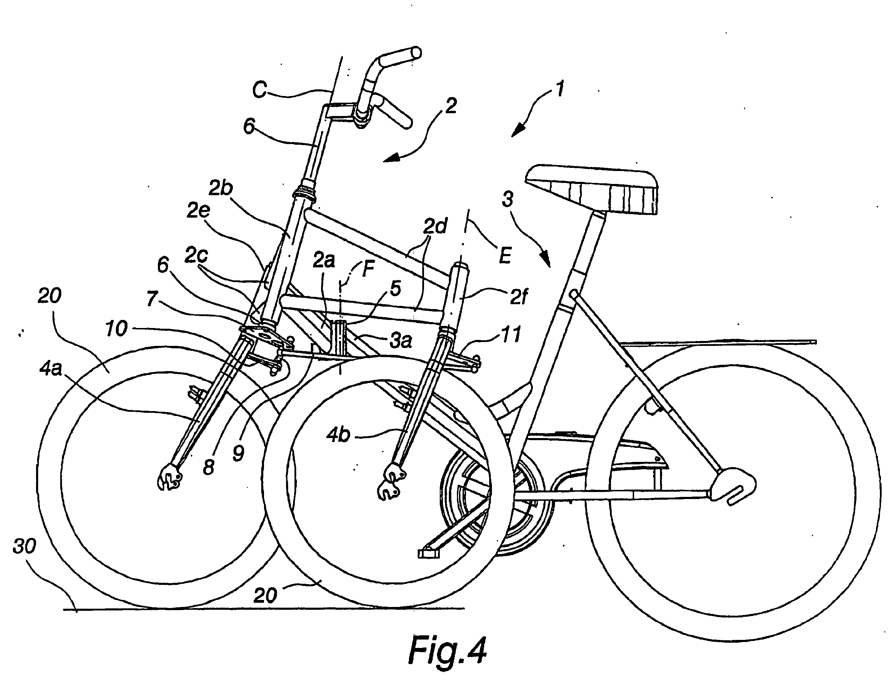

Adapted to extend diagonally forward from the vicinity of a crankhub and from the bottom section of a seat tube is a intermediate tube 2a, 3a, one end (forward end) of which is provided with a control bearing 2b. The intermediate tube 2a, 3a is articulated to be foldable by means of a frame hinge, a connecting link or the like 5. Here, the connecting link 5 has its pivot journal F arranged to be substantially perpendicular with respect to the ground 30 (see fig. 4). The connecting link 5 divides the frame of the bike 1 in such a way that the section downstream of the connecting link 5 comprises the rear bike frame 3 and the section upstream of the connecting link 5 comprises the front bike frame 2 and steering elements. It is apparent from fig. 1 that, when the connecting link 5 is clamped, a centre axis B of the front frame 2 and a centre axis A of the rear frame 3 lie in a common lateral plane. Operation of the link 5 will be described in more detail hereinafter.

Hence, the front frame 2 includes a intermediate tube element 2a, having its first end fitted with the connecting link 5. The intermediate tube element 2a has its second end provided with a tubular control bearing 2b, through which is fitted a bearing tube 6a for a handlebar 6. The control bearing 2b is mounted on the front frame 2 in a substantially vertical position, yet preferably in a slightly forward leaning position, such that its bottom portion extends further forward than its top portion. The front frame 2 includes elongated suspension arms 2c and 2d, which constitute an extended-width element for the front frame 2. The suspension arms 2c and 2d are secured to the control bearing 2b and extend a distance relative to the centre axis B of the front frame 2 on either side of the control bearing 2b. The individual suspension arm 2c or 2d comprises preferably two tubular suspension arm elements, the first of which is attached by its first end to the top section of the control bearing 2b and the second of which is attached by its first end to the bottom section of the control bearing 2b, such that the second ends of the arms extend relative to the centre axis B a distance in a lateral, diagonally rearward direction. Optionally, the suspension arm 2c, 2d may also consist of one or more than two suspension arm elements.

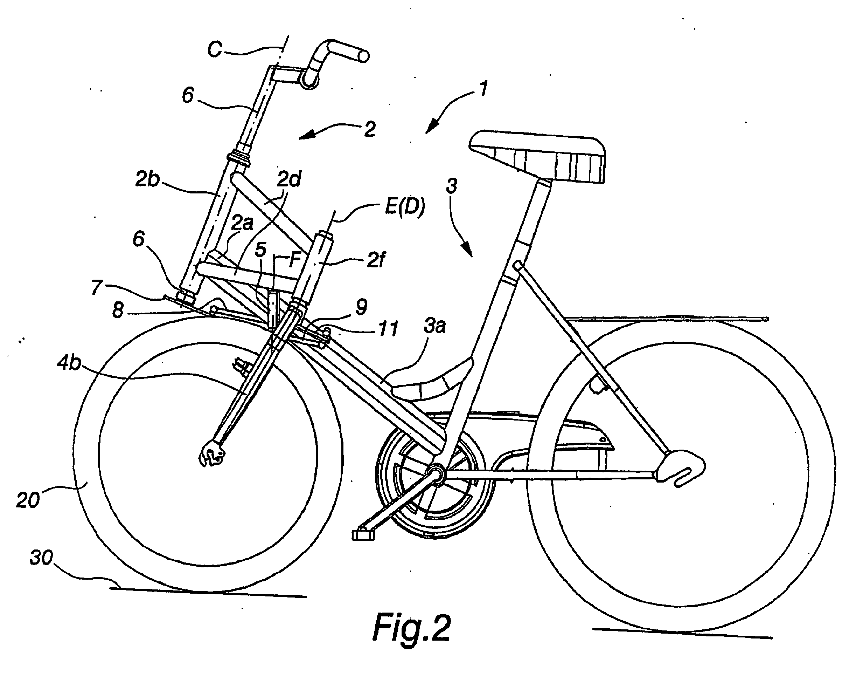

The suspension arms 2c and 2d have their second ends provided with bearing tubes 2e and 2f. The bearing tubes 2e and 2f are in turn fitted with bearing supports 4a and 4b. Here, the latter have a basic design consistent with conventional front forks. The front forks 4a and 4b are fitted in the bearing tubes 2e and 2f in such a way that the front forks 4a and 4b are located below the bearing tubes 2e and 2f. The bearing tubes 2e and 2f are mounted on the second ends of the suspension arm elements in a position substantially parallel to the control bearing 2b but, in view of the longitudinal direction of the centre axis A, B, a distance downstream of the control bearing 2b. Thus, the suspension arms 2c and 2d, along with the forks 4a and 4b attached thereto, constitute in this embodiment, when viewed from above (see fig. 2), a wide open, V-shaped, laterally expanded element for the front frame 2. The front tires 20 are fastened by way of the bearing journals thereof to the front forks 4a and 4b in a conventional fashion.

Instead of the front forks 4a, 4b, the front wheel 20 may have its bearing support consist of a block articulated to the end of the suspension arm 2c, 2d. To this block the bearing journal of the front wheel 20 is only attached by one of its ends.

The front frame 2 is provided with control elements for steering the bicycle 1. One component of the control or steering elements is the handlebar 6, having its head tube 6a led through the control bearing 2a in such a way that one end of the head tube 6a extends beyond the control bearing 2b and revolves within the control bearing 2b around its longitudinal axis C. The head tube 6a has its top end provided with a grip element for turning the same. The head tube 6a has its bottom end fitted with an integral or removable plate-like swivel element 7. The plate-like swivel element 7 extends a distance in the direction of the longitudinal axis B of the front frame 2 rearwards from the control bearing 2b. The swivel element 7 has two tie rods 8 and 9 articulated thereto by their first ends. The swivel element 7 need not be of a plate-like design. It is sufficient that it has enough material for articulating the tie rods 8 and 9. The tie rod 8 has its length dimensioned in such a way that its second end is articulated to the front fork 4a, preferably to a pivot arm 10 mounted on the front fork 4a. Respectively, the tie rod 9 has its length dimensioned in such a way that its second end is articulated to the front fork 4b, preferably to a pivot arm 11 mounted on the front fork 4b. Thus, the rotary motion of the head tube 6a is transmitted by way of the swivel element 7 to the tie rods 8 and 9 for a lateral movement, and thence further to the pivot arms 10 and 11 of the front forks 4a and 4b, respectively. This movement is transmitted further to the forks 4a and 4b, which turn simultaneously under the control of the bearing tubes 2e and 2f around axes of rotation D and E, the front wheels 20 mounted on the front forks 4a and 4b turning to an angle corresponding to the rotary movement of the head tube 6a.

The connecting link 5 between the front frame 2 and the rear frame 3 comprises a journal F substantially vertical to the ground level, which is laterally distanced from a vertical plane extending through the longitudinal axis A of the rear frame and relative to which the connecting link 5 (its lateral elements) can be opened and closed. Since the entire front frame 2 is attached with the connecting link 5 to the rear frame, the entire front frame 2 can be pivoted relative to the longitudinal axis A of the rear frame 3 to an angle around this vertical journal F. The front frame 2 is pivoted by pushing it essentially forward by means of the handlebar 6 connected with the front frame 2, whereby the connecting link 5 opens and, at the same time, pivots the entire front frame 2 to an angle α consistent with the opening angle of the connecting link 5. As a matter of fact, in this context the angle α represents an angle between the longitudinal axis A of the rear frame 3 and the longitudinal axis B of the front frame 2. The angle α is preferably in the order of 0-50°.

Pivoting the front frame 2 about the journal F results in a concurrent turning of the elongated suspensions arms 2c and 2d, and the bearing tubes 2e and 2f mounted on the ends thereof, along radial paths. The paths have a common centre which is the fulcrum of the vertical link axle 5, which constitutes the above-mentioned pivot journal F substantially vertical to the ground. Thus, the bearing tubes make a rotating move, under the guidance of the suspension arms 2c and 2e, closer to the centre axis A of the rear frame 3, resulting in a reduced wheel gauge R between the tires 20 mounted thereon. The link 5 is preferably provided with a locking mechanism (not shown), capable of locking the link 5 and consequently the front frame 2 and the rear frame 3 to the desired angle α.

Turning the front frame 2 this way does not alter the turning angle of the front wheels 20 relative to the centre axis A of the rear frame 3, but, instead, by virtue of the tie rods 8 and 9, the front wheels 20 always maintain the direction in which the handlebar 6 is positioned.

## Claims

1. A bicycle or a kickboard (1) equipped with two front wheels (20), comprising a rear frame (3) and a front frame (2), said front frame (2) including elongated suspension arms (2c, 2d) extending a distance in a substantially transverse direction relative to a centre axis (A, B) and having the ends thereof provided with gearing-mounted and/or articulated bearing supports (4a, 4b) for the front wheels (20), said front wheels (20) having a gauge which is alterable in a direction transverse to the driving direction and said front frame (2) having provided therewith a handlebar (6), as well as steering elements (7, 8, 9, 10, 11) between the handlebar (6) and the bearing supports (4a, 4b) for steering the bicycle or kickboard (1),
whereby the steering elements (7, 8, 9, 10, 11) include: a frame hinge, a connecting link (5), which is provided between the front frame (2) and the rear frame (3) and as a result of whose function the position of the front frame (2) and/or the centre axis (B) of the front frame (2) is pivotable relative to the rear frame (3) and/or the centre axis (A) of the rear frame (3); tie rods (8, 9), by way of which the handlebar (6) is coupled with the bearing supports (4a, 4b) for steering the bicycle or kickboard (1) in response to the handlebar (6) regardless of a pivoted position of the front frame (2) with respect to the rear frame (3), while the gauge between the front wheels (20) in the direction transverse to the driving direction is dependent on a pivoted position of the front frame (2) with respect to the rear frame (3).

2. A bicycle of kickboard as set forth in claim 1, whereby pivoting the position of the front frame (2) results in a respective alteration of a wheel gauge (R) between the front wheels (20) mounted on the ends of the suspension arms (2c, 2d).

3. A bicycle or kickboard as set forth in claim 1 or 2, whereby between the rear frame (3) and the front frame (2) is fitted a frame hinge, a connecting link or the like (5), comprising a pivot journal (F), which is set in a substantially perpendicular position relative to the ground level and which is distanced laterally from a vertical plane extending the longitudinal axis (A) of the rear frame, and about which the centre axis (B) of the front frame (2) is pivotable relative to the centre axis (A) of the rear frame (3) to an angle (α), said angle (α) being preferably in the order of 0-50°.

4. A bicycle or kickboard as set forth in any of the preceding claims 1-3, whereby the position of the front frame (2) is pivotable by means of the handlebar (6) connected with the front frame (2).

5. A bicycle or kickboard as set forth in any of the preceding claims 1-4, whereby the frame hinge, the connecting link or the like (5) is provided with locking elements capable of locking the front frame (2) in any pivoted position.

6. A bicycle or kickboard as set forth in any of the preceding claims 1-5, whereby the bearing supports (4a, 4b) are designed as forks.

7. A bicycle or kickboard as set forth in any of the preceding claims 1-5, whereby the bearing support (4a, 4b) comprises a block articulated to the end of the suspension arm (2c, 2d), to which the front wheel (20) has its bearing journal only attached by one of its ends and to which the pivot arm (10, 11) is attached.

## Patentansprüche

1. Ein Fahrrad oder Kickboard (1) ausgestattet mit zwei Vorderrädern (20), aufweisend einen rückwärtigen Rahmen (3) und einen vorderseitigen Rahmen (2), wobei der vorderseitige Rahmen (2) zwei langgestreckte Trägerarme (2c, 2d) umfasst, die sich im Abstand in einer im wesentlichen Querrichtung relativ zu einer zentralen Achse (A, B) erstrecken und Enden aufweisen, die mit Lagerbefestigung und/oder beweglichen Lagerabstützungen (4a, 4b) für die Vorderräder versehen sind, wobei die Vorderräder (20) eine Spur aufweisen, die in einer Richtung quer zur Fahrtrichtung veränderbar ist und wobei der Vorderrahmen (2) mit einer Lenkstange (6) versehen ist, wie auch mit Steuerelementen (7, 8, 9, 10, 11) zwischen der Lenkstange und den Lagerabstützungen (4a, 4b) zur Steuerung des Fahrrads oder des Kickboards, wobei die Steuerelemente (7, 8, 9, 10, 11) einschließen: ein Rahmengelenk, ein Verbindungsgelenk (5), welches zwischen dem Vorderrahmen (2) und dem Rückrahmen (3) vorgesehen ist und als Ergebnis dessen Funktion die Stellung des Vorderrahmens und/oder der zentralen Achse (B) des Vorderrahmens (2) drehbar ist relativ zu dem Rückrahmen (3) und/oder der Zentralachse (A) des Rückrahmens (3); Zugstangen (8,9), mit Hilfe welcher die Lenkstange (6) mit den Lagerabstützungen (4a, 4b) gekuppelt ist zur Steuerung des Fahrrads oder Kickboards (1) in Reaktion auf die Lenkstange (6) unbesehen einer Drehstellung des Vorderrahmens (2) relativ zu dem Rückrahmen (3), wobei die Spur zwischen den Vorderrädern (20) in einer Richtung quer zu der Antriebsrichtung abhängig ist von einer Drehstellung des Vorderrahmens (2) relativ zu dem Rückrahmen (3).

2. Fahrrad oder Kickboard nach Anspruch 1,wobei eine Verdrehung der Stellung des Vorderrahmens (2) sich in einer entsprechenden Veränderung der Radspur (R) zwischen den Vorderrädern (20), angebracht an den Aufhängungsarmen (2c, 2d), auswirkt.

3. Fahrrad oder Kickboard nach einem der Ansprüche 1 oder 2, wobei zwischen den Rückrahmen (3) und dem Frontrahmen (2) ein Rahmengelenk angebracht ist, ein Verbindungsglied oder dergleichen (5), aufweisend ein Drehlager (F) welches in einer im Wesentlichen rechtwinkligen Stellung relativ zu der Bodenebene eingestellt ist und welches seitlich beabstandet ist von einer Vertikalebene welche sich durch Längsachse (A) des Rückrahmens erstreckt und um welche die Zentralachse (B) des Vorderrahmens (2) drehbar ist relativ zu der Zentralachse (A) des Rückrahmens (3) um einen Winkel (α), wobei der Winkel (α) vorzugsweise im Bereich von 0 bis 50° ist.

4. Fahrrad oder Kickboard nach einem der vorstehenden Ansprüche 1 bis 3, wobei die Stellung des Rückrahmens (2) drehbar ist mit Hilfe der mit dem Vorderrahmen (2) verbundenen Lenkstange (6).

5. Fahrrad oder Kickboard nach einem der vorherstehenden Ansprüche 1 bis 4, wobei das Rahmengelenk, das Verbindungsglied oder dergleichen (5), mit Verriegelungselementen versehen ist, die in der Lage sind, den Vorderrahmen in einer Drehstellung zu verriegeln.

6. Fahrrad oder Kickboard nach einem der vorstehenden Ansprüche 1 bis 5, wobei die Lagerabstützung (4a, 4b) als Gabeln ausgebildet sind.

7. Fahrrad oder Kickboard nach einem der vorstehenden Ansprüche 1 bis 5, wobei die Lagerabstützung (4, 4b) einen Block aufweist, der am Ende der Aufhängungsarme (2c, 2d) gelenkig angebracht ist, an welchem ein Ende eines Lagerzapfens des Vorderrades (20) angebracht ist, und an welchem der Dreharm (10, 11) angebracht ist.

## Revendications

1. Bicyclette ou trottinette (1) munie de deux roues avant (20), comportant un châssis arrière (3) et un châssis avant (2), ledit châssis avant (2) comportant des bras de suspension allongés (2c, 2d) s'étendant sur une distance dans une direction sensiblement transversale par rapport à un axe central (A, B) et ayant leurs extrémités munies de supports d'appui articulés et/ou montés sur engrenage (4a, 4b) pour les roues avant (20), lesdites roues avant (20) ayant un écartement qui est modifiable dans une direction transversale à la direction d'entraînement, et ledit châssis avant (2) étant muni d'un guidon (6), de même que d'éléments de braquage (7, 8, 9, 10, 11) entre le guidon (6) et les supports d'appui (4a, 4b) pour braquer la bicyclette ou trottinette (1), alors que les éléments de braquage (7, 8, 9, 10, 11) comportent : une articulation de châssis, une biellette de connexion (5), qui est agencée entre le châssis avant (2) et le châssis arrière (3), et dont la fonction résulte en ce que la position du châssis avant (2) et/ou de l'axe central (B) du châssis avant (2) peut pivoter par rapport au châssis arrière (3) et/ou l'axe central (A) du châssis arrière (3), des tiges de liaison (8, 9) par l'intermédiaire desquelles le guidon (6) est couplé aux supports d'appui (4a, 4b) pour braquer la bicyclette ou trottinette (1) en réponse au guidon (6) indépendamment d'une position pivotée du châssis avant (2) par rapport au châssis arrière (3), tandis que l'écartement entre les roues avant (20) dans la direction transversale à la direction d'entraînement dépend d'une position pivotée du châssis avant (2) par rapport au châssis arrière (3).

2. Bicyclette ou trottinette selon la revendication 1, dans laquelle un pivotement de la position du châssis avant (2) a pour résultat une modification respective d'un écartement de roues (R) entre les roues avant (20) montées sur les extrémités des bras de suspension (2c, 2d).

3. Bicyclette ou trottinette selon la revendication 1 ou 2, dans laquelle entre le châssis arrière (3) et le châssis avant (2) est agencée une articulation de châssis, une biellette de connexion ou analogue (5), comportant un tourillon de pivotement (F), qui est établi dans une position sensiblement perpendiculaire par rapport au niveau du sol, et qui est à distance latéralement d'un plan vertical s'étendant le long de l'axe longitudinal (A) du châssis arrière, et autour duquel l'axe central (B) du châssis avant (2) peut pivoter par rapport à l'axe central (A) du châssis arrière (3) sur un angle (α), ledit angle (α) étant de préférence de l'ordre de 0 à 50°.

4. Bicyclette ou trottinette selon l'une quelconque des revendications 1 à 3, dans laquelle la position du châssis avant (2) peut pivoter par l'intermédiaire du guidon (6) connecté au châssis avant (2).

5. Bicyclette ou trottinette selon l'une quelconque des revendications 1 à 4, dans laquelle l'articulation de châssis, la biellette de connexion ou analogue (5) est munie d'éléments de verrouillage capables de verrouiller le châssis avant (2) dans une position pivotée quelconque.

6. Bicyclette ou trottinette selon l'une quelconque des revendications 1 à 5, dans laquelle les supports d'appui (4a, 4b) sont conçus sous la forme de fourche.

7. Bicyclette ou trottinette selon l'une quelconque des revendications 1 à 5, dans laquelle le support d'appui (4a, 4b) comporte un bloc articulé sur l'extrémité du bras de suspension (2c, 2d), sur lequel la roue avant (20) a son tourillon d'appui fixé uniquement par une de ses extrémités, et sur lequel est fixé le bras de pivotement (10, 11).
